# EUROPEAN PATENT APPLICATION

(11) **EP 1 881 238 A1**
(43) Date of publication of application: **23.01.2008**
(21) Application number: 06732624.9
(22) Date of filing: 10.05.2006
(51) Int. Cl.: F16H 61/00, F16H 37/02, F16H 57/02, F16H 59/14

(54) **CONTINUOUSLY VARIABLE TRANSMISSION, DRIVE DEVICE, AND METHOD OF CONTROLLING THE DRIVE DEVICE**

(30) Priority: 11.05.2005 JP 2005138003
(71) Applicant: Daihatsu Motor Co., Ltd., Ikeda-shi, Osaka 563-8651 (JP)
(72) Inventor: SHIMAMOTO, Masao, Ikeda-shi, Osaka 5638651 (JP); KUBO, Ryouichi, Ikeda-shi, Osaka 5638651 (JP)
(74) Representative: Kramer - Barske - Schmidtchen
(86) International application number: PCT/JP2006/309773
(87) International publication number: WO 2006/121190

(57) **Abstract**

A continuously variable transmission includes a belt type continuously variable transmission device A and a forward and reverse movement change-over device 4 having a planetary gear mechanism 40, a reverse rotation brake 50 and a direct coupled clutch 60, and that selectively fastens the reverse rotation brake and the direct coupled clutch to perform forward and reverse movement change-over. An operating piston 62 of the direct coupled clutch is arranged in a stationary cylinder fixed to a transmission case so that an axial pressure of the operating piston of the direct coupled clutch is transmitted to the transmission case 5a via a bearing 16 that rotatably supports a pulley shaft 10 of the continuously variable transmission device. A hydraulic pressure adjustment unit SLU 72 for controlling a supply pressure to the direct coupled clutch 60 to a minimum hydraulic pressure that does not cause any slip in the direct coupled clutch in accordance with a change of input torque is provided.

## Description

### Technical Field

The present invention relates to a continuously variable transmission, and specifically, to a continuously variable transmission that includes a belt-type continuously variable transmission device, and a forward and reverse movement change-over device having a planetary gear mechanism, a reverse rotation brake, and a direct coupled clutch, and that selectively fasten the reverse rotation brake and the direct coupled clutch to perform forward and reverse movement change-over.

The present invention also relates to a driving device and its control method.

### Background Art

A continuously variable transmission including a planetary gear mechanism, a direct coupled clutch, and a reverse rotation brake, as a forward and reverse movement change-over device is disclosed in Patent Document 1. Fig. 7 shows a clutch modulator valve for clutch pressure control shown in Patent Document 1. In this clutch modulator valve 100, line pressure P_{L} is input to an input port 101, clutch pressure P_{c} is output from an output port 102, and this clutch pressure P_{c} is selectively supplied to a reverse rotation brake and a direct coupled clutch via a manual valve that is not shown. The clutch pressure P_{c} is fed back to a first signal port 103 in a direction that faces the load of a spring 104, and the hydraulic pressure during reverse movement, i.e., the supply pressure of the reverse rotation brake, is input to a second signal port 105 in the same direction as the load of the spring 104. An oil passage is changed over by a manual valve so that, during forward movement, the direct coupled clutch may be fastened and a reverse rotation brake may released, and during reverse movement, the reverse rotation brake may be fastened and the direct coupled clutch may be released.

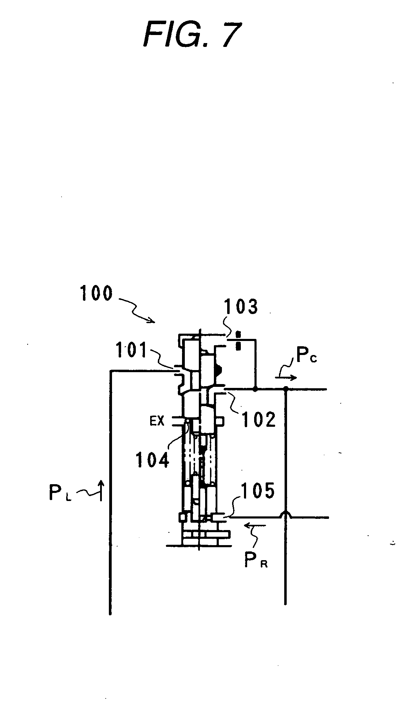

The clutch modulator valve 100 is in the left position of Fig. 7 if the line pressure P_{L} is below predetermined pressure, and outputs the same clutch pressure as the line pressure. If the line pressure exceeds predetermined pressure, the load by the clutch pressure P_{c} input to the first signal port 103 exceeds the spring load that biases a spool. Therefore, the spool moves downward, and the clutch pressure P_{C} is limited to fixed pressure. Further, since the hydraulic pressure during reverse movement is input to the second signal port 105 during reverse movement, the clutch pressure P_{C} during reverse movement can be regulated high compared with the clutch pressure during forward movement.

Meanwhile, as for the direct coupled clutch, its clutch drum is connected with a ring gear, and a clutch hub is connected with the carrier. The operating piston of the direct coupled clutch is arranged in the rotating clutch drum that rotates (rotating cylinder structure). Thus, in order to supply hydraulic pressure into the clutch drum, a relative rotationable part between the clutch drum and the fixed member needs a seal structure for preventing oil leakage. As a result, there is a problem in that a sliding resistance becomes large. Further, since centrifugal hydraulic pressure is generated in an oil chamber of the clutch drum by a centrifugal force accompanying rotation, a mechanism that cancels the centrifugal hydraulic pressure is needed. As a result, there is a problem in that an apparatus becomes complicated.

Thus, in order to eliminate sliding resistance and to prevent generation of centrifugal hydraulic pressure, a stationary cylinder structure in which the operating piston of the direct coupled clutch is arranged in a transmission case or in a member fixed thereto is considered. However, when the stationary cylinder structure is adopted, a reaction force receiving structure of axial pressure is needed, unlike the rotating cylinder structure in which the axial pressure (thrust load) of the operating piston is balanced within the clutch drum.

As the reaction force receiving structure, a structure in which an intermediate wall is provided so as to protrude from the transmission case between the forward and reverse movement change-over device, and a driving pulley of the continuously variable transmission, and the axial pressure is supported by the intermediate wall is considered. However, in this case, there are problems in that it is necessary to arrange a thrust bearing between the intermediate wall and the forward and reverse movement change-over device, the number of parts increases, the cost rises, and the axial dimension increases due to the necessity of securing the strength of the intermediate wall.

If the reaction force receiving structure as described above is not adopted, the axial pressure of the operating piston when the direct coupled clutch is fastened is transmitted to a driving-side pulley shaft of an continuously variable transmission device via the planetary gear mechanism, and is further transmitted to the transmission case via the radial bearing that rotationally supports the end of the pulley shaft that faces the direct coupled clutch. Therefore, there is a drawback that the thrust load to the radial bearing increases, and the lifespan of the bearing becomes short. Although this problem can be solved by increasing the size of the bearing, there is a drawback that the cost rises, and the dimension increases.
Patent Document 1: JP-A-2002-181175

### Disclosure of the Invention

Thus, an object of the invention is to provide a continuously variable transmission that makes it possible to give a stationary cylinder structure to a direct coupled clutch, reduce the axial pressure that is applied to a radial bearing during fastening of the direct coupled clutch, and improve the lifespan of the bearing. Another object of the invention is to provide a driving device and its control method that make it possible to reduce the axial pressure that is applied to a radial bearing during fastening of the direct coupled clutch, and improve the lifespan of the bearing.

In order to achieve at least one of the above objects, the invention provides a continuously variable transmission comprises a belt type continuously variable transmission device, and a forward and reverse movement change-over device. Here, the forward and reverse movement change-over device includes a planetary gear mechanism, a reverse rotation brake, and a direct coupled clutch, and selectively fastens the reverse rotation brake and the direct coupled clutch to perform forward and reverse movement change-over. An operating piston of the direct coupled clutch is integrally formed in the transmission case, or is arranged in a stationary cylinder fixed to the transmission case so that the axial pressure of the operating piston of the direct coupled clutch is transmitted to a driving shaft of the continuously variable transmission device, and the axial pressure is transmitted to the transmission case via a bearing that rotatably supports the end of the driving shaft facing the direct coupled clutch. A hydraulic pressure adjustment unit controls a supply pressure to the direct coupled clutch to a minimum hydraulic pressure that does not cause any slip in the direct coupled clutch in accordance with a change in input torque.

Generally, the direct coupled clutch and reverse rotation brake used for the forward and reverse movement change-over device of the continuously variable transmission is always fastened or released during forward travel and during reverse travel, only by change-over only during forward and reverse movement change-over. Therefore, there is no need of originally performing hydraulic pressure control. However, like the invention, if a stationary cylinder structure is given to the direct coupled clutch, and the thrust load during fastening of the clutch is applied to the radial bearing, the problem that the lifespan of the bearing is lowered due to the thrust load occurs. The invention solves such problems.

When the direct coupled clutch with a stationary cylinder structure is fastened, the axial pressure of the operating piston is transmitted to the transmission case via the radial bearing from the driving-side pulley shaft. However, by controlling the supply pressure to be supplied to the direct coupled clutch, to a minimum hydraulic pressure that does not cause slip in accordance with a change in input torque, the thrust load to be applied to the bearing can be reduced to the minimum. Therefore, lowering of the lifespan of the bearing can be prevented. Further, since the thrust load is reduced during fastening of the direct coupled clutch, any mechanical loss can also be reduced. On the other hand, since the axial pressure of the operating piston of the reverse rotation brake is absorbed within the transmission case, and the thrust load does not affect the bearing, there is no need to control the supply pressure of the reverse rotation brake in accordance with a change in input torque.

Further, in the continuously variable transmission, it is preferable to use a clutch to be fastened during reverse movement as the direct coupled clutch, and to use a brake fastened during forward movement as the reverse rotation brake. Contrary to this, a clutch to be fastened during forward movement may be used the direct coupled clutch, and a brake fastened during reverse movement may be used as the reverse rotation brake. However, if a thrust force is applied to the bearing during forward movement with high use frequency, the lifespan of the radial bearing will be affected. On the other hand, if a clutch to be fastened during reverse movement is used as the direct coupled clutch, a thrust force during reverse movement with low use frequency is applied to the bearing. Thus, there is an advantage that the lifespan of the radial bearing is extended.

Further, in the continuously variable transmission, it is preferable that the hydraulic pressure control unit is a solenoid for lock-up. Since lock-up control is not performed during reverse movement, the solenoid for lock-up can also be used as a minimum hydraulic pressure control unit of the direct coupled clutch, and it is not necessary to newly provide a dedicated solenoid as the hydraulic pressure control unit.

Further, in order to achieve at least one of the above objects, the invention provides a driving mechanism including: a forward and reverse movement change-over device that includes a planetary gear, a direct coupled clutch and a reverse rotation brake, and that selectively fastens the reverse rotation brake and the direct coupled clutch to perform forward and reverse movement change-over; an input shaft that is connected with the planetary gear to transmit torque to the forward and reverse movement change-over device; and a pressure control unit that controls the pressure to be supplied to the direct coupled clutch. Here, the pressure control unit adjusts the pressure to be supplied to the direct coupled clutch in accordance with the torque transmitted to the forward and reverse movement change-over device, when the direct coupled clutch is fastened.

According to the driving device of the invention, when the direct coupled clutch is fastened, the thrust load to be applied to the bearing can be reduced to the minimum by controlling the axial pressure of the operating piston.

Further, in order to achieve at least one of the above objects, the invention provides a control method of a driving mechanism including a forward and reverse movement change-over device that has a planetary gear, direct coupled clutch and a reverse rotation brake, and that selectively fastens the reverse rotation brake and the direct coupled clutch to perform forward and reverse movement change-over, and an input shaft that is connected with the planetary gear to transmit torque to the forward and reverse movement change-over device. The control method includes: fastening the direct coupled clutch; and controlling the supply pressure to the direct coupled clutch in accordance with a change of input torque via the input shaft.

According to the driving device of the invention, when the direct coupled clutch is fastened, the thrust load to be applied to the bearing can be reduced to the minimum by controlling the axial pressure of the operating piston.

As described above, according to the continuously variable transmission of the invention, by providing a direct coupled clutch having a stationary cylinder structure, sliding resistance can be eliminated, and generation of centrifugal hydraulic pressure can be prevented. Also, by making the supply pressure during fastening of the direct coupled clutch as low as possible, the axial pressure of the direct coupled clutch to be applied to a bearing can be reduced, the lifespan of the bearing can be improved, and a mechanical loss can be reduced.

Furthermore, according to the driving device and its control method of the invention, by making the supply pressure during fastening of the direct coupled clutch as low as possible, the axial pressure of the direct coupled clutch to be applied to a bearing can be reduced, the lifespan of the bearing can be improved, and a mechanical loss can be reduced.

### Brief Description of the Drawings

Fig. 1 is an expanded sectional view of an example of a continuously variable transmission according to the invention.
Fig. 2 is a skeleton view of the continuously variable transmission shown in Fig. 1.
Fig. 3 is a detailed sectional view of a forward and reverse movement change-over device of the continuously variable transmission shown in Fig. 1.
Fig. 4 is a hydraulic circuit diagram of the continuously variable transmission shown in Fig. 1.
Fig. 5 is a characteristic diagram of each hydraulic pressure in the hydraulic circuit of Fig. 4.
Fig. 6 is a skeleton view of a second example of the forward and reverse movement change-over device according to the invention.
Fig. 7 is a conventional clutch control valve.

Best Mode for Carrying out the Invention

Hereinafter, the embodiment of the invention will be described with reference to examples.

### Example 1

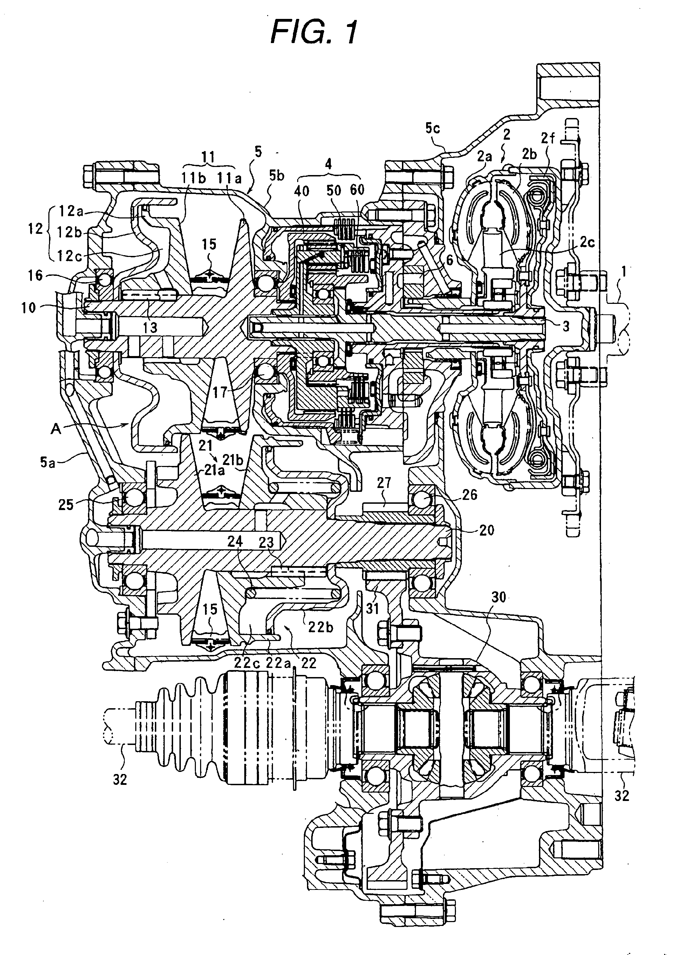

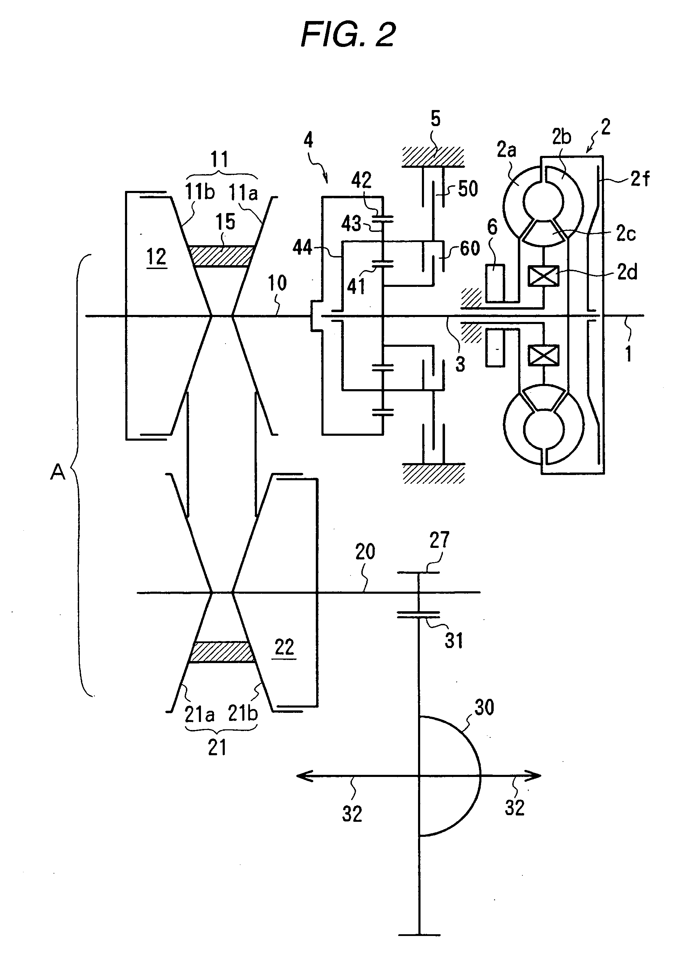

Figs. 1 to 3 show an example of a continuously variable transmission according to the invention.

The continuously variable transmission of this example is an FF transverse-mounted transmission for automobiles. This transmission is roughly constituted by an input shaft 3 that is driven via a torque converter 2 by an engine shaft 1, a forward and reverse movement change-over device 4 that forwardly and reversely changes over the rotation of the input shaft 3 to transmit the rotation to a driving shaft 10, an continuously variable transmission device A made up of a driving pulley 11, a driven pulley 21, and a V belt 15 wound between both pulleys, a differential device 30 that transmits the power of a driven shaft 20 to an output shaft 32, and the like. The input shaft 3 and the driving shaft 10 are arranged on the same axis, and the driven shaft 20 and the output shaft 32 of the differential device 30 are arranged parallel to and non-coaxially with the input shaft 3. Accordingly, this continuously variable transmission is made up of three shafts as a whole. The V belt 15 used in this example is a well-known metallic belt made up of a pair of endless tension bands, and a number of blocks supported by the tension bands.

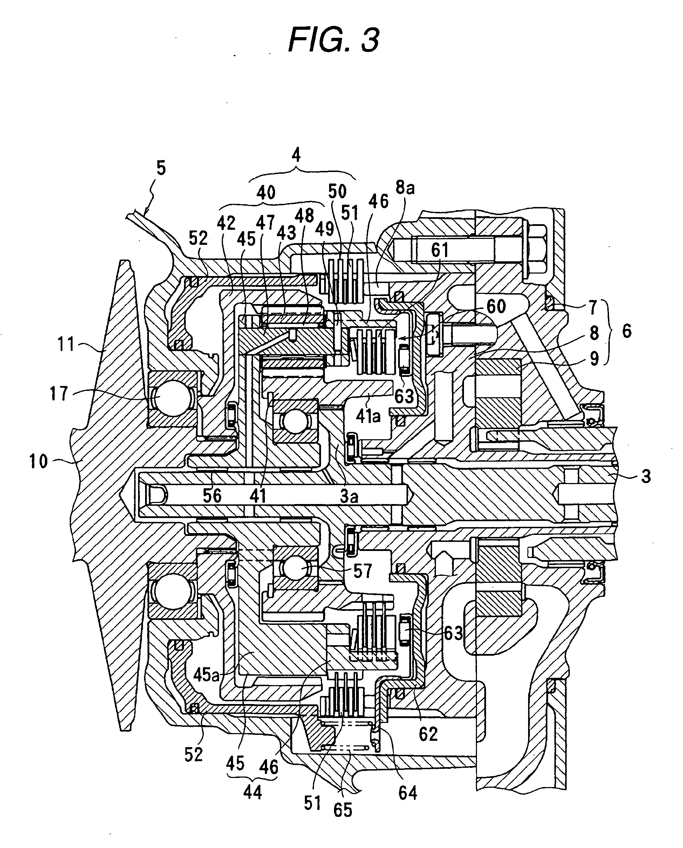

Each part that constitutes the continuously variable transmission is housed within a transmission case 5 (5a, 5b, and 5c). An oil pump 6 is arranged between the torque converter 2 and the forward and reverse movement change-over device 4. This oil pump 6, as shown in Fig. 3, is constituted by a pump body 7 fixed to the transmission case 5, a pump cover 8 fixed to the pump body 7, and a pump gear 9 housed between the pump body 7 and the pump cover 8. The pump gear 9 is driven by a pump impeller 2a of the torque converter 2. In addition, a turbine runner 2b of the torque converter 2 is connected with the input shaft 3, and a stator 2c is supported by the pump cover 8 via a one-way clutch 2d. A lock-up clutch 2f is provided between the input shaft 3 and the pump impeller 2a.

The forward and reverse movement change-over device 4, as shown in Fig. 3, is constituted by a planetary gear mechanism 40, a reverse rotation brake 50, and a direct coupled clutch 60. A sun gear 41 of the planetary gear mechanism 40 is connected with the input shaft 3 that is an input rotational member, and a ring gear 42 is connected with the driving shaft 10 that is an output rotational member. The planetary gear mechanism 40 is of a single pinion type, the reverse rotation brake 50 is provided between a carrier 44 supporting a pinion gear 43, and the transmission case 5, and the direct coupled clutch 60 is provided between the carrier 44 and the sun gear 41. If the direct coupled clutch 60 is released to fasten the reverse rotation brake 50, the rotation of the input shaft 3 is reversed, and is decelerated and transmitted to the driving shaft 10. On the contrary, since the carrier 44 and sun gear 41 of the planetary gear mechanism 40 rotate together if the reverse rotation brake 50 is released to fasten the direct coupled clutch 60, the input shaft 3 and the driving shaft 10 are directly coupled together. In addition, the concrete structure of the forward and reverse movement change-over device 4 will be described below.

The driving pulley 11 of the continuously variable transmission device A includes a fixed sheave 11a that is formed integrally on the driving shaft (pulley shaft) 10, a movable sheave 11b that is supported on the driving shaft 10 so as to be axially movable and integrally rotatable via a roller spline part 13, and a hydraulic servo 12 provided behind the movable sheave 11b. A piston part 12a extending to the rear side is formed integrally at an outer peripheral part of the movable sheave 11b, and the outer peripheral part of this piston part 12a comes into sliding contact with an inner peripheral part of a cylinder 12b fixed to the driving shaft 10. A working oil chamber 12c of the hydraulic servo 12 is formed between the movable sheave 11b and the cylinder 12b, and transmission control is made by controlling the pressure of oil to this working oil chamber 12c.

The driven pulley 21 includes a fixed sheave 21a that is formed integrally on the driven shaft (pulley shaft) 20, a movable sheave 21b that is supported on the driving shaft 20 so as to be axially movable and integrally rotatable via a roller spline part 23, and a hydraulic servo 22 provided behind the movable sheave 21b. The structure of this roller spline part 23 is the same as that of the roller spline part 13 of the driving pulley 11. A cylinder part 22a extending to the rear side is formed integrally at an outer peripheral part of the movable sheave 21b, and a piston 22b fixed to the driving shaft 20 comes into sliding contact with an inner peripheral part of this cylinder part 22a. A working oil chamber 22c of the hydraulic servo 22 is formed between the movable sheave 21b and the piston 22b, and the belt thrust required for torque transmission is given by controlling the pressure of oil to this working oil chamber 22c. In addition, a spring 24 that gives initial thrust is arranged in the working oil chamber 22c.

One end of the driven shaft 20 extends toward the engine, and an output gear 27 is fixed to this end. The output gear 27 meshes with the ring gear 31 of the differential device 30, and power is transmitted to the output shaft 32 extending to the right and left from the differential device 30, thereby driving wheels.

Here, the concrete structure of the forward and reverse movement change-over device 4 will be described in detail referring to Fig. 3. The carrier 44 is constituted by a disc-like carrier flange 45 and an annular carrier rim 46. An internal diameter part of the carrier flange 45 extends in the internal diameter direction between the sun gear 41 and the ring gear 42, and is rotatably supported by the input shaft 3 via a bush 56. The internal diameter part of the carrier flange 45 extends in a back-and-forth direction, and the inclination of the carrier flange 45 to the input shaft 3 is suppressed by arranging a plurality of the bushes 56 between the internal diameter part and the input shaft 3. A plurality of (here six) columnar parts 45a that project axially toward the carrier rim 46 are integrally formed at the carrier flange 45, and the pinion gear 43 is arranged in a space between the columnar parts 45a. The tip faces of the above columnar parts 45a and the carrier rim 46 are metal-bonded by sintering, and the carrier flange 45 and the carrier rim 46 are fixed integrally. In addition, they may be fixed by welding, soldering, screwing, etc.

Between the above carrier flange 45 and the carrier rim 46, a pinion shaft 47 that supports the pinion gear 43 is bridged and supported. Further, a needle bearing 48 is arranged in a gap between the inner periphery of the pinion gear 43, and the outer periphery of the pinion shaft 47, and the pinion gear 43 is rotatable with respect to the pinion shaft 47. One end of the pinion shaft 47 inserted into the carrier rim 46 is fixed to the carrier rim 46 by a roller pin 49 press-fitted from outside the carrier rim 46 in its radial direction.

An outer diameter part of a clutch plate 61 of the direct coupled clutch 60 comes into spline engagement with the inner peripheral part of the carrier rim 46, and an internal diameter part of a brake plate 51 of the reverse rotation brake 50 comes into spline engagement with the outer peripheral part of the carrier rim 46. As such, the carrier rim 46 serves as a brake hub of the reverse rotation brake 50, and a clutch drum of the direct coupled clutch 60.

The piston 52 of reverse-rotation brake 50 is arranged within the cylinder part of the transmission case 5, and the piston 52 can be operated by the hydraulic pressure supplied to the cylinder part, and to fasten the brake plate 51. As a reaction member supporting the end of the brake plate 51 pushed by the pressure of the piston 52, a cylindrical stopper part 8a is provided so as to protrude integrally from the pump cover 8 that is a stationary member. Therefore, a snap ring 5 supporting the end of the brake plate 51 can be omitted.

As shown in Fig. 3, the sun gear 41 comes into spline fitting with the outer periphery of a flange part 3a formed integrally in the input shaft 3, and a cylindrical part 41a used as the clutch hub of the direct coupled clutch 60 is provided so as to protrude integrally from the front side (engine side) of the sun gear 41. An internal diameter part of the clutch plate 61 of the direct coupled clutch 60 comes into spline engagement with the outer periphery of the cylindrical part 41a. The sun gear 41 meshes with the pinion gear 43, and a ball bearing 57 is attached between an inner peripheral surface of the sun gear 41, and an outer peripheral surface of the internal diameter part of the carrier flange 45.

A piston 62 having a transversely U-shaped cross-section is arranged at the rear side (on the side of the forward and reverse movement change-over device) of the pump cover 8, and the direct coupled clutch 60 is fastened by this piston 62. That is, the operating piston 62 of the direct coupled clutch 60 has a stationary cylinder structure in which the piston is housed in a member (pump cover 8) fixed to the transmission case 5. A thrust bearing 63 that permits relative rotation is attached to a side surface of the piston 62 that faces the clutch plate 61. Therefore, the axial pressure of the piston 62 is effectively transmitted to the clutch plate 61, and the relative rotation between the piston 62 and the clutch plate 61 is permitted. The axial pressure (thrust load) of the operating piston 62 is transmitted to the driving shaft 10 via the ring gear 42 from the carrier 44. Both ends of the driving shaft 10 are supported by ball bearings 16 and 17, and the axial pressure of the operating piston 62 is transmitted to the transmission case 5a via the ball bearing 16 supporting the end of the driving shaft 10 on the side of the forward and reverse movement change-over device. Accordingly, thrust load acts on the ball bearing 16 during fastening of the direct coupled clutch 60 (during reverse movement). However, as will be described below, the fastening force (supply pressure) of the direct coupled clutch 60 is adjusted to a hydraulic pressure in accordance with any input torque (engine torque), i.e., a required minimum hydraulic pressure that does not generate slip, lowering of the lifespan of the bearing 16 can be prevented.

A spring retainer 64 is arranged at the side surface of the outer peripheral part of the piston 62 for a direct coupled clutch. This spring retainer 64 projects in the circumferential direction from the piston 63, and a return spring 65 is arranged between this peripheral part and the piston 52 for a reverse rotation brake. This spring 65 serves as a return spring for both the piston 62 for a direct coupled clutch, and the piston 52 for a reverse rotation brake, and a proper number of the springs are provided on the outer peripheral side of the brake plate 51 of the reverse rotation brake 50. Since the reverse rotation brake 50 and the direct coupled clutch 60 do not operate simultaneously, one kind of spring 65 can serve as both return springs.

In the continuously variable transmission that having the above configuration, by fastening the reverse rotation brake 50 and releasing the direct coupling clutch 60, the driving force input from the torque converter 2 is reversed and decelerated, and transmitted to the driving pulley 11. Also, the output shaft 32 is driven in the same direction as the direction of rotation of the engine via the driven pulley 21 and the differential device 30, resulting in a forward driving state. On the other hand, since the input side (sun gear 41) and output side (ring gear 42) of the planetary gear mechanism 40 are directly coupled by fastening the direct coupled clutch 60 and releasing the reverse rotation brake 50, the driving force input from the torque converter 2 is transmitted to the driving pulley 11 as it is, and the output shaft 32 is driven in the direction reverse to the direction of rotation of the engine via the driven pulley 21 and the differential device 30, resulting in a reverse driving state. A compact continuously variable transmission can be realized by such three shaft configuration.

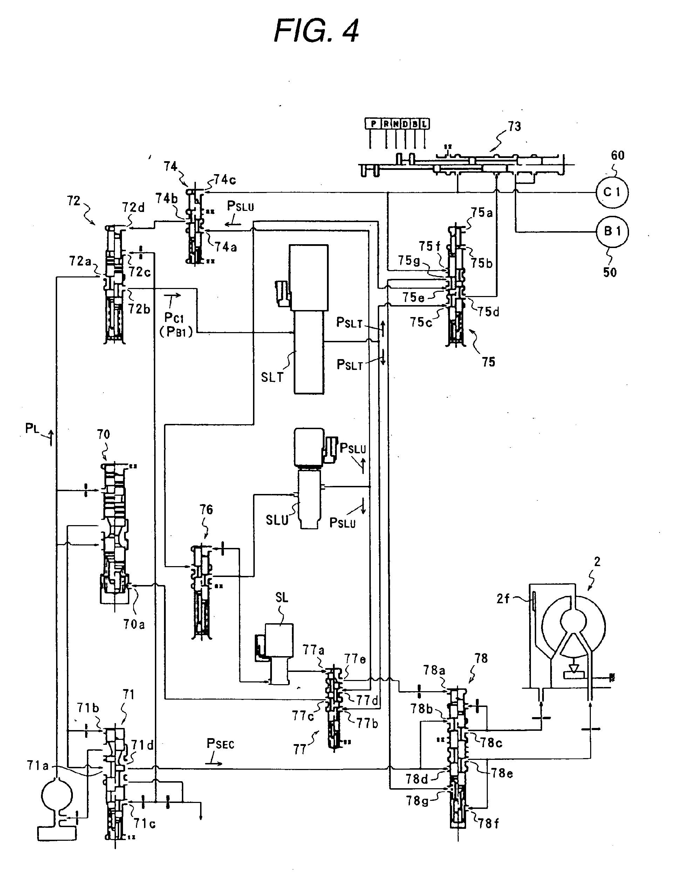

Fig. 4 is a hydraulic circuit diagram of the continuously variable transmission having the above configuration.

In Fig. 4, reference numeral 70 indicates a primary regulator valve that regulates the discharge pressure of the oil pump 6 to predetermined line pressure, reference numeral 71 indicates a secondary regulator valve that regulates the line pressure to secondary pressure, reference numeral 72 indicates a clutch modulator valve that regulates the supply pressure to the direct coupled clutch 60 and the reverse rotation brake 50, reference numeral 73 indicates a manually operated manual valve, reference numeral 74 indicates a cutback valve by that cuts off signal pressure P_{SLU} of a solenoid valve SLU during forward movement, reference numeral 75 indicates a garage shift valve, reference numeral 76 indicates a solenoid modulator valve that generates solenoid modulator pressure, reference numeral 77 indicates a solenoid relay valve for change-over of solenoid pressure during lock-up, and reference numeral 78 indicates a lock-up control valve for lock-up control of the torque converter 2.

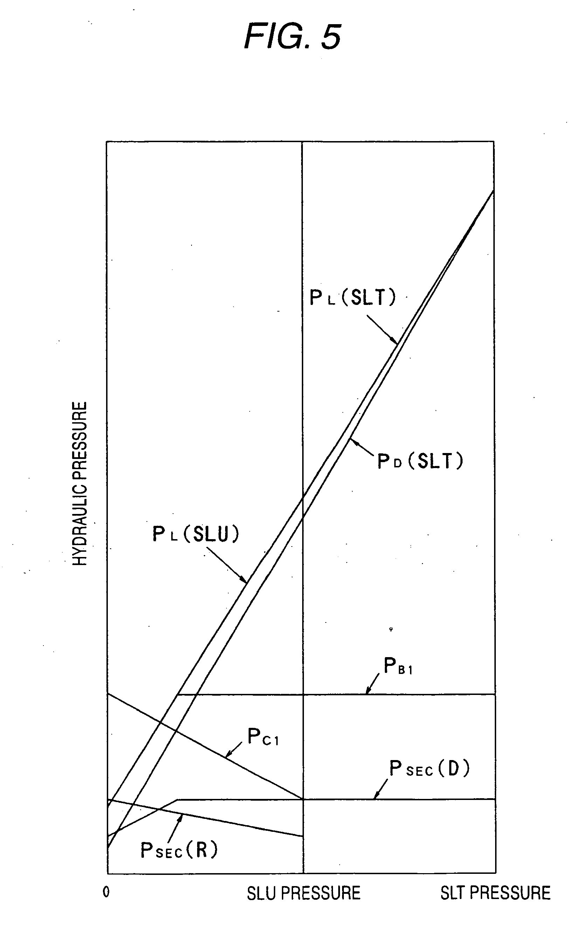

SLT is a solenoid valve for line pressure control, SLU is a solenoid valve for hydraulic pressure control of the torque converter 2, and SL is a solenoid valve for lock-up control. The solenoid valve SLT is constituted by a normally opened linear solenoid valve, the solenoid valve SLU is constituted by a normally closed line valve, and the solenoid valve SL is constituted by a normally closed duty solenoid valve. The solenoid valve SLT is controlled by a control circuit that is not shown on the basis of running signals, such as a pulley ratio, throttle opening, and engine rpm, and is also used for hydraulic pressure control during garage shift, and thrust control of the driven pulley 21, other than the line pressure control. In this example, the pressure adjustment range of the solenoid valve SLU is set to the half of the pressure adjustment range of the solenoid valve SLT. In addition since the thrust control of the driven pulley 21 is as described in Patent Document 1, only hydraulic pressure characteristics straight line P_{D(SLT)} is shown in Fig. 5, and description thereof is omitted. The solenoid valve SLU is used for clutch pressure control during reverse movement other than lock-up control on the basis of a running signal, similarly the solenoid valve SLT.

The primary regulator valve 70, as widely known, is a valve that regulates the discharge pressure of the oil pump 6 to predetermined line pressure, and that regulates the discharge pressure to the line pressure in accordance with a signal hydraulic pressure input to a signal port 70. The signal pressure of either the solenoid valve SLT or the solenoid valve SLU is input to the signal port 70a from a solenoid relay valve 77. Since the solenoid valve SL is turned off during non-lock-up, the signal pressure P_{SL} is not input to the signal port 77a of the solenoid relay valve 77, and solenoid relay valve 77 is in a left position. Therefore, the signal pressure P_{SLT} of the solenoid valve SLT is input to the port 70a via ports 77b and 77c of the solenoid relay valve 77, and the line pressure is regulated by the solenoid valve SLT. On the other hand, since the solenoid valve SL is turned on during lock-up, the solenoid relay valve 77 is changed over to a right position by the signal pressure, the signal pressure P_{SLU} of the solenoid valve SLU is input to the port 70a via ports 77d and 77c, and the line pressure is regulated by the solenoid valve SLU. Therefore, line pressure rises in proportion to the signal pressure of the solenoid valve SLT or SLU, like P_{L} of Fig. 5.

The secondary regulator valve 71 regulates the line pressure to secondary pressure, the line pressure is input to the input port 71a and the signal port 71b, and the signal pressure input to the signal port 71b, and the spring load that biases a spool face each other. Further, the output pressure of the clutch regulator valve 72 as will be described below is input to a second signal port 71c in the same direction as the spring load. Therefore, the secondary pressure output from an output port 71d, as indicated by P_{SEC} of Fig. 5, will rise at a gradient different from the line pressure if it is below predetermined pressure, and will be limited to fixed pressure if it exceeds predetermined pressure.

A signal port 77e of the solenoid relay valve 77 and a signal port 78a of the lock-up control valve 78 are connected together. Therefore, the signal pressure P_{SL} of the solenoid valve SL for lock-up control is input to the signal port 77a of the solenoid relay valve 77, thereby changing over the solenoid relay valve 77 to a right position, and the signal pressure P_{SL} is also input to the signal port 78a of the lock-up control valve 78 from the port 77e. Therefore, in synchronization with change-over of the solenoid relay valve 77 to a right position, the lock-up control valve 78 is also changed over to the right position. When the lock-up control valve 78 is in a left position, the secondary pressure P_{SEC} regulated by the secondary regulator valve 71 is supplied to the release side of the torque converter 2 via the ports 78b and 78c of the lock-up control valve 78, keeping a non-lock-up state. When the lock-up control valve 78 is changed over to a right position, the secondary pressure P_{SEC} is supplied to the application side of the torque converter 2 via the ports 78d and 78e of the lock-up control valve 78, which results in a lock-up state. The application pressure is fed back to a port 78f, and this pressure and the signal pressure P_{SL} input to the port 78a are regulated in a balanced manner.

The clutch modulator valve 72, as described above, is a valve that regulates the supply pressure (clutch pressure P_{C1}, P_{B1}) to the direct coupled clutch 60 and the reverse rotation brake 50. The line pressure P_{L} is input to the input port 72a, and the clutch pressure is output from the output port 72b. Further, the clutch pressure that is output pressure is fed back to the first signal port 72c so as to face the spring load that biases a spool. Therefore, the clutch pressure P_{B1} during forward movement, as shown in Fig. 5, will be output as the same pressure as the line pressure if the line pressure is below predetermined pressure, and will be limited to fixed pressure if the line pressure exceeds predetermined pressure. Moreover, the clutch modulator valve 72 are provided with a second signal port 72d to which signal pressure is input so as to face the spring load, and the signal pressure P_{SLU} is input to this signal port 72d from the solenoid valve SLU via the cutback valve 74. The solenoid valve SLU is a solenoid valve for lock-up control. However, since it is not necessary to perform lock-up control during reverse movement, the hydraulic pressure (clutch pressure) P_{C1} of the direct coupled clutch 60 for reverse movement is controlled using this solenoid valve SLU.

The cutback valve 74 includes an input port 74a to which the signal pressure P_{SLU} from the solenoid valve SLU is input, an output port 74b connected to the second signal port 72d of the clutch modulator valve 72, and a signal port 74c connected with the direct coupled clutch 60 (C1), and the signal pressure input to the signal port 74c and the spring load that biases a spool face each other. Since the direct coupled clutch 60 is released during forward movement, the cutback valve 74 is in a left position, and cuts off the input port 74a and the output port 74b. Therefore, the signal pressure P_{SLU} from the solenoid valve SLU does not affect the second signal port 72d of the clutch modulator valve 72 at all, but the clutch pressure P_{B1} is controlled as shown in Fig. 5. On the other hand, since the direct coupled clutch 60 is fastened during reverse movement, the cutback valve 74 is changed over to a right position, and thereby the input port 74a and the output port 74b communicate with each other. Therefore, the signal pressure P_{SLU} from the solenoid valve SLU is input to the second signal port 72d of the clutch modulator valve 72, and as shown in Fig. 5, the pressure reduction of the supply pressure P_{C1} of the direct coupled clutch 60 is controlled by the solenoid valve SLU. That is, if input torque is small, the signal pressure P_{SLU} from the solenoid valve SLU is increased, and if the input torque is large, the signal pressure P_{SLU} from the solenoid valve SLU is reduced. Thereby, since the solenoid valve SLU outputs signal pressure in accordance with input torque, the supply pressure P_{C1} is regulated to required minimum hydraulic pressure at which slip is not caused in accordance with input torque. As a result, the thrust load that acts on the ball bearing 16 with fastening of the direct coupled clutch 60 can be reduced, and lowering of the lifespan of the ball bearing 16 can be prevented. Further, since a non-lock-up state is maintained during reverse movement, the solenoid valve SLT performs thrust control of the driven pulley 21 along with the line pressure control. In this case, since belt squeezing pressure P_{D(SLT)} is also increased by raising the signal pressure P_{SLT} from the solenoid valve SLT in accordance with an increase in input torque, any belt slip is prevented.

The garage shift valve 75 is a selector valve for controlling to smoothly start the supply pressure to the direct coupled clutch 60 and the reverse rotation brake 50, when a shift lever is changed over from N to D or from N to R. With change-over from N to D or from N to R, signal pressure is input to the signal ports 75a and 75b from solenoid valves (not shown) for down-shift and up-shift so as to face the spring load that biases a spool. Therefore-- the garage shift valve 75 is changed over to a left position, the hydraulic pressure that smoothly rises by the solenoid valve SLT is delivered to the manual valve 73 via the ports 55c and 75d, and is further supplied to the direct coupled clutch 60 or the reverse rotation brake 50. As a result, a fastening shock is avoided. If the hydraulic pressure now rises up to its maximum hydraulic pressure, the signal pressure of the signal ports 75a and 75b will be drained. Therefore, the garage shift valve 75 is changed over to a right position, the predetermined clutch pressure is supplied to the direct coupled clutch 60 or the reverse rotation brake 50 via the ports 75e and 75d from the clutch modulator valve 72, which keeps a fastening state. In addition, if change-over is made from N to R, after the garage shift valve 75 is changed over to a right position, the hydraulic pressure of the direct coupled clutch 60 is input to the port 75f of the garage shift valve 75, and is input to a signal port 78g of a lock-up control valve 78 via a port 75g. Therefore, the lock-up control valve 78 is fixed in a non-lock-up position, and during reverse movement, the control valve does not lock up.

### Example 2

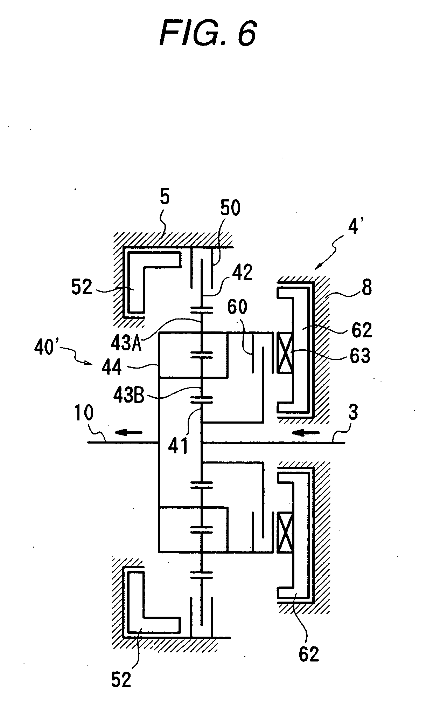

Fig. 6 shows a second example of the forward and reverse movement change-over device according to the invention. The same parts in Fig. 6 as the first example are denoted by the same reference numerals, and duplicate description thereof is omitted. This forward and reverse movement change-over device 4' includes a planetary gear mechanism 40' of a double pinion type, a reverse rotation brake 50, and a direct coupled clutch 60. Two kinds of pinion gears 43A and 43B are supported by the carrier 44 of the planetary gear mechanism 40'. One pinion gear 43A meshes with the ring gear 42 and the pinion gear 43B, and the other pinion gear 43B meshes with the pinion gear 43A and the sun gear 41. The sun gear 41 is coupled with the input shaft 3, and the carrier 44 is coupled with the driving shaft 10. The reverse rotation brake 50 is provided between the ring gear 42 and the transmission case 5, and the operating piston 52 that operates the reverse rotation brake 50 is arranged within the transmission case 5. The direct coupled clutch 60 is provided between the carrier 44 and the sun gear 41, and the operating piston 62 that operates the direct coupled clutch 60 is housed within the oil pump cover 8 that is a stationary cylinder. The thrust bearing 63 is arranged between the operating piston 62, and a clutch disc of the direct coupled clutch 60.

If the reverse rotation brake 50 is fastened to release the direct coupled clutch 60, the rotation of the input shaft 3 is reversed, and transmitted to the output shaft 10, which results in a forward driving state. Further, if the reverse rotation brake 50 is released to fasten the direct coupled clutch 60, the input shaft 3 and the output shaft 10 are directly coupled together, which results in a reverse driving state. Even in this embodiment, when the direct coupled clutch 60 with a stationary cylinder structure is fastened, the thrust load of the clutch acts on a radial bearing via the pulley shaft 10. However, by controlling the supply pressure of the direct coupled clutch 60 according to input torque, the thrust load to be applied to the radial bearing is reduced, and lowering of the lifespan of the bearing can be prevented.

Although the single-pinion-type forward and reverse movement change-over device 4, and the double-pinion-type forward and reverse movement change-over device 4' have been described in the above examples, the invention is not limited thereto. For example, in the case of the forward and reverse movement change-over device provided with the direct coupled clutch to be fastened during forward movement like Patent Document 1, a stationary cylinder structure may be adopted as the direct coupled clutch. In this case, thrust load acts at the driving pulley during forward movement. However, the thrust load of the bearing that supports the driving pulley can be reduced by reducing the supply pressure of the direct coupled clutch to a minimum hydraulic pressure that does not cause slip. Although the above examples have been described taking the continuously variable transmission as an example, the invention is not limited thereto. For example, the invention can also be applied to a driving mechanism including a forward and reverse movement change-over device that has a planetary gear, a direct coupled clutch, and a reverse rotation brake, and that selectively fastens the reverse rotation brake and the direct coupled clutch to perform forward and reverse movement change-over, an input shaft that is connected with the planetary gear to transmit torque to the forward and reverse movement change-over device, and a pressure control unit that controls the pressure to be supplied to the direct coupled clutch.

### Industrial Applicability

According to the continuously variable transmission of the invention, by providing a direct coupled clutch having a stationary cylinder structure, sliding resistance can be eliminated, and generation of centrifugal hydraulic pressure can be prevented. Also, by making the supply pressure during fastening of the direct coupled clutch as low as possible, the axial pressure of the direct coupled clutch to be applied to a bearing can be reduced, the lifespan of the bearing can be improved, and a mechanical loss can be reduced. Further, according to the driving mechanism of the invention, by providing a direct coupled clutch having a stationary cylinder structure, sliding resistance can be eliminated, and generation of centrifugal hydraulic pressure can be prevented. Also, by making the supply pressure during fastening of the direct coupled clutch as low as possible, the axial pressure of the direct coupled clutch to be applied to a bearing can be reduced, the lifespan of the bearing can be improved, and a mechanical loss can be reduced.

## Claims

1. A continuously variable transmission housed in a transmission case, the transmission comprising:
a belt type continuously variable transmission device;
a forward and reverse movement change-over device that includes a planetary gear mechanism, a reverse rotation brake and a direct coupled clutch, and that selectively fastens the reverse rotation brake and the direct coupled clutch to perform forward and reverse movement change-over, an operating piston of the direct coupled clutch being integrally formed in the transmission case or being arranged in a stationary cylinder fixed to the transmission case so that an axial pressure of the operating piston of the direct coupled clutch is transmitted to a driving shaft of the continuously variable transmission device;
a bearing that rotatably supports the end of the driving shaft facing the direct coupled clutch, the axial pressure being transmitted to the transmission case via the bearing;
a hydraulic pressure adjustment unit that controls a supply pressure to the direct coupled clutch to a minimum hydraulic pressure that does not cause any slip in the direct coupled clutch in accordance with a change of input torque.

2. The continuously variable transmission according to Claim 1,
wherein the direct coupled clutch is a clutch to be fastened during the reverse movement.

3. The continuously variable transmission according to Claim 2,
wherein the hydraulic pressure control unit is a solenoid for lock-up.

4. A driving mechanism comprising:
a forward and reverse movement change-over device that includes a planetary gear, a direct coupled clutch and a reverse rotation brake, and that selectively fastens the reverse rotation brake and the direct coupled clutch to perform forward and reverse movement change-over;
an input shaft that is connected with the planetary gear to transmit torque to the forward and reverse movement change-over device; and
a pressure control unit that controls pressure to be supplied to the direct coupled clutch,
wherein the pressure control unit adjusts the pressure to be supplied to the direct coupled clutch in accordance with the torque transmitted to the forward and reverse movement change-over device, when the direct coupled clutch is fastened.

5. The drive mechanism according to Claim 4,
wherein the pressure control unit performs a control so as to increase the pressure to be supplied to the direct coupled clutch when the torque transmitted to the forward and reverse movement change-over device becomes large.

6. The drive mechanism according to Claim 4 or 5, further comprising a torque converter,
wherein the torque transmitted to the forward and reverse movement change-over device is output from the torque converter.

7. The drive mechanism according to any one of Claims 4 to 6, further comprising a variable-speed device,
wherein the torque transmitted to the forward and reverse movement change-over device is output to the variable-speed device.

8. The drive mechanism according to Claim 4,
wherein the variable-speed device is an continuously variable transmission device.

9. A control method of a driving mechanism including:
a forward and reverse movement change-over device that has a planetary gear, direct coupled clutch and a reverse rotation brake, and that selectively fastens the reverse rotation brake and the direct coupled clutch to perform forward and reverse movement change-over; and
an input shaft that is connected with the planetary gear to transmit torque to the forward and reverse movement change-over device, the control method comprising:
fastening the direct coupled clutch; and
controlling a supply pressure to the direct coupled clutch in accordance with a change of input torque input via the input shaft.
